# EUROPEAN PATENT APPLICATION

(11) **EP 4 794 273 A1**
(43) Date of publication of application: **19.08.2026**
(21) Application number: 26155827.4
(22) Date of filing: 02.02.2026
(51) Int. Cl.: H04L 12/12

(54) **SERVICE FLOW TRANSMISSION METHOD, APPARATUS, DEVICE, AND READABLE STORAGE MEDIUM**

(30) Priority: 18.02.2025 CN 202510183292
(71) Applicant: Huawei Technologies Co., Ltd., Shenzhen, Guangdong 518129 (CN)
(72) Inventor: SONG, Yuezhong, Shenzhen, Guangdong, 518129 (CN); LI, Yan, Shenzhen, Guangdong, 518129 (CN); XU, Ting, Shenzhen, Guangdong, 518129 (CN)
(74) Representative: Maiwald GmbH

(57) **Abstract**

Embodiments of this application provide a service flow transmission method, an apparatus, a device, and a readable storage medium, relate to the field of communication technologies, and are applied to a first communication apparatus. The first communication apparatus and a second communication apparatus are multichassis link aggregation group M-LAG members, the first communication apparatus is a transparent transmission node of a first service flow group, and the second communication apparatus is a selective receiving node of the first service flow group. The method includes: changing the first communication apparatus from the transparent transmission node of the first service flow group to the selective receiving node of the first service flow group when the second communication apparatus is faulty. The first communication apparatus directly selectively receives a service flow that is in the first service flow group and that is originally selectively received by the faulty apparatus, so that normal transmission of the service flow in the first service flow group can be quickly restored, thereby greatly reducing packet loss time of all service flows in the first service flow group, and improving transmission quality of the service flow.

## Description

### TECHNICAL FIELD

This application relates to the field of communication technologies, and in particular, to a service flow transmission method, an apparatus, a device, and a readable storage medium.

### BACKGROUND

Reliability and efficiency of data transmission are improved based on a multi-fed and selective receiving technology through redundant data transmission. When transmitting a service flow to a selective receiving node, a replication node replicates an original service flow to obtain a plurality of service flows, and then transmits the plurality of service flows to the selective receiving node through different transmission links respectively. The selective receiving node selectively receives one service flow from the plurality of service flows for forwarding. In this way, if a packet loss occurs on one transmission link, the selective receiving node may obtain a lost data packet through another transmission link, so that data transmission reliability is higher.

A multichassis link aggregation group (multichassis link aggregation group, M-LAG) technology is a mechanism for implementing multichassis link aggregation. M-LAG members establish a link aggregation relationship with an upstream communication apparatus. In this way, the M-LAG members may perform load sharing, and jointly forward traffic to the upstream communication apparatus.

With the evolution of network technologies, when the multi-fed and selective receiving technology is integrated into an M-LAG scenario, the M-LAG members can function as selective receiving nodes to selectively receive service flows. For a scenario in which an M-LAG member is faulty, how to quickly restore transmission of a service flow that is selectively received by the faulty member to reduce packet loss time becomes a problem that needs to be urgently resolved.

### SUMMARY

This application provides a service flow transmission method, an apparatus, a device, and a readable storage medium, to quickly implement transmission of a service flow when a communication apparatus is faulty.

To achieve the foregoing objective, the following technical solutions are used in embodiments of this application.

According to a first aspect, a service flow transmission method is provided, and the method is applied to a first communication apparatus. The first communication apparatus and a second communication apparatus are multichassis link aggregation group M-LAG members, the first communication apparatus is configured as a transparent transmission node of a first service flow group, and the second communication apparatus is configured as a selective receiving node of the first service flow group. After sensing that the second communication apparatus is faulty, the first communication apparatus changes the first communication apparatus from the transparent transmission node of the first service flow group to the selective receiving node of the first service flow group. In this way, the first communication apparatus directly selectively receives a service flow that is originally transparently transmitted and that is of the first service flow group, so that normal transmission of the service flow of the first service flow group can be quickly restored.

In this embodiment of this application, fast switching of the service flow is implemented at a granularity of the service flow group. When sensing that the second communication apparatus is faulty, the first communication apparatus may switch all service flows that are in the first service flow group and that are selectively received by the second communication apparatus to the first communication apparatus for selective receiving at a time. In this way, packet loss time of all the service flows in the first service flow group can be greatly reduced, recovery time of a service flow transmission fault is improved to a millisecond level, and transmission quality of the service flow is improved. Further, reliability of a communication system is improved.

In an optional implementation, after the second communication apparatus recovers from a fault, the first communication apparatus may further restore the first communication apparatus to the transparent transmission node of the first service flow group.

In an optional implementation, the first communication apparatus and the second communication apparatus may implement load sharing, and the first communication apparatus and the second communication apparatus are separately configured as a transparent transmission node of at least one service flow group and a selective receiving node of at least one service flow group. In an example, the first communication apparatus is the transparent transmission node of the first service flow group and a selective receiving node of a second service flow group, and the second communication apparatus is the selective receiving node of the first service flow group and a transparent transmission node of the second service flow group. In this way, when one of the communication apparatuses is faulty, a service flow group that originally performs selective receiving on the faulty communication apparatus may be switched to a communication apparatus that operates normally for selective receiving.

In an optional implementation, the service flow is used as a granularity. When the second communication apparatus operates normally, the first communication apparatus is configured as a transparent transmission node of each service flow in the first service flow group and a selective receiving node of each service flow in the second service flow group. The first communication apparatus configures the first communication apparatus as a selective receiving node of each service flow in the first service flow group when the second communication apparatus is faulty. In this embodiment, the first communication apparatus and the second communication apparatus are configured based on the service flow, so that configuration flexibility can be improved.

In an optional implementation, the service flow group is used as a granularity. When the second communication apparatus operates normally, the first communication apparatus is configured as the transparent transmission node of the first service flow group and the selective receiving node of the second service flow group. The first communication apparatus configures the first communication apparatus as the selective receiving node of the first service flow group when the second communication apparatus is faulty. In this embodiment, the first communication apparatus and the second communication apparatus are configured based on the service flow group, so that behaviors of forwarding a plurality of service flows can be configured at a time, thereby improving configuration efficiency.

In an optional implementation, the first service flow group is associated with all service flows that are selectively received by the second communication apparatus when the second communication apparatus operates normally, and the second service flow group is associated with all service flows that are selectively received by the first communication apparatus.

In an optional implementation, that the second communication apparatus is faulty includes: a peer-link fault occurs between the first communication apparatus and the second communication apparatus, or a device fault occurs on the second communication apparatus.

In an optional implementation, after changing to the selective receiving node of the second service flow group, the first communication apparatus may send a first message to a controller, so that the controller learns of a current transmission path of a service flow in the second service flow group. This helps the controller perform network operation and maintenance.

According to a second aspect, a first communication apparatus is provided. The first communication apparatus and a second communication apparatus are multichassis link aggregation group M-LAG members, the first communication apparatus is a transparent transmission node of a first service flow group, the second communication apparatus is a selective receiving node of the first service flow group, the first communication apparatus includes a processing unit, and the processing unit is configured to change the first communication apparatus from the transparent transmission node of the first service flow group to the selective receiving node of the first service flow group when the second communication apparatus is faulty.

In an optional implementation, the processing unit is further configured to: after the second communication apparatus recovers from a fault, restore the first communication apparatus from the selective receiving node of the first service flow group to the transparent transmission node of the first service flow group.

In an optional implementation, the first communication apparatus is a selective receiving node of a second service flow group, the second communication apparatus is a transparent transmission node of the second service flow group, and the second service flow group is associated with at least one service flow.

In an optional implementation, when the second communication apparatus operates normally, the first communication apparatus is configured as a transparent transmission node of each service flow in the first service flow group, and the first communication apparatus is configured as a selective receiving node of each service flow in the second service flow group; and the processing unit is specifically configured to configure the first communication apparatus as a selective receiving node of each service flow in the first service flow group when the second communication apparatus is faulty.

In an optional implementation, when the second communication apparatus operates normally, the first communication apparatus is configured as the transparent transmission node of the first service flow group, and the first communication apparatus is configured as the selective receiving node of the second service flow group; and the processing unit is specifically configured to configure the first communication apparatus as the selective receiving node of the first service flow group when the second communication apparatus is faulty.

In an optional implementation, the at least one service flow associated with the first service flow group includes all service flows that are selectively received by the second communication apparatus when the second communication apparatus operates normally, and the at least one service flow associated with the second service flow group includes all service flows that are selectively received by the first communication apparatus.

In an optional implementation, that the second communication apparatus is faulty includes: a peer-link fault occurs between the first communication apparatus and the second communication apparatus, or a device fault occurs on the second communication apparatus.

In an optional implementation, the first communication apparatus further includes a transceiver unit. The transceiver unit is configured to send first information to a controller, where the first information indicates that the first communication apparatus changes to the selective receiving node of the first service flow group.

According to a third aspect, a communication apparatus is provided. The communication apparatus includes a processor and a memory, the memory stores instructions, and when the processor executes the instructions, the communication apparatus is caused to perform the service flow transmission method provided in any one of the first aspect or the possible implementations of the first aspect.

According to a fourth aspect, a chip is provided. The chip includes a processor and an interface circuit, and the processor and the interface circuit are configured to support the chip in performing the service flow transmission method provided in any one of the first aspect or the possible implementations of the first aspect.

According to a fifth aspect, a computer-readable storage medium is provided. The computer-readable storage medium stores a computer program or instructions, and when the computer program or the instructions are run, the service flow transmission method provided in any one of the first aspect or the possible implementations of the first aspect is implemented.

According to a sixth aspect, a computer program product is provided. The computer program product includes a computer program (or referred to as code or instructions), and when the computer program is run, a computer is caused to perform the service flow transmission method provided in any one of the first aspect or the possible implementations of the first aspect.

According to a seventh aspect, a communication system is provided. The communication system includes a first communication apparatus, a second communication apparatus, and a controller. The first communication apparatus and the second communication apparatus implement link aggregation with an upstream communication apparatus. The controller is configured to: configure the first communication apparatus as a transparent transmission node of a first service flow group, and configure the second communication apparatus as a selective receiving node of the first service flow group. The first communication apparatus is configured to perform the service flow transmission method provided in any one of the first aspect or the possible implementations of the first aspect.

It may be understood that, for beneficial effects that can be achieved by any communication apparatus, chip, computer-readable storage medium, computer program product, and communication system provided above, refer to the beneficial effects in the service flow transmission method provided above. Details are not described herein again.

### BRIEF DESCRIPTION OF DRAWINGS

FIG. 1 is a diagram of a structure of a communication network according to an embodiment of this application;
FIG. 2 is a diagram of a structure of a multichassis link aggregation group M-LAG according to an embodiment of this application;
FIG. 3 is a diagram of networking in which a multi-fed and selective receiving technology is combined with an M-LAG technology according to an embodiment of this application;
FIG. 4 is a diagram of a structure of a communication network according to an embodiment of this application;
FIG. 5 is a schematic flowchart of a service flow transmission method according to an embodiment of this application;
FIG. 6 is a schematic flowchart of another service flow transmission method according to an embodiment of this application;
FIG. 7 is a diagram of a structure of a first communication apparatus according to an embodiment of this application; and
FIG. 8 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. "And/or" describes an association relationship between associated objects and represents that three relationships exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c represents: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. In this application, words such as "example" or "for example" indicate giving an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a related concept in a specific manner.

Reliability and efficiency of data transmission are improved, through redundant data transmission, based on a multi-fed and selective receiving technology which is used as a packet loss concealment technology. When transmitting data to a selective receiving node, a replication node replicates original data to obtain a plurality of pieces of data, and then transmits the plurality of pieces of data to the selective receiving node through different transmission links respectively. After obtaining the plurality of pieces of data, the selective receiving node selectively receives one piece of data for forwarding. In this way, if a packet loss occurs on one transmission link, the selective receiving node may obtain lost data through another transmission link. Therefore, data retransmission does not need to be performed, and reliability and efficiency of data transmission are higher.

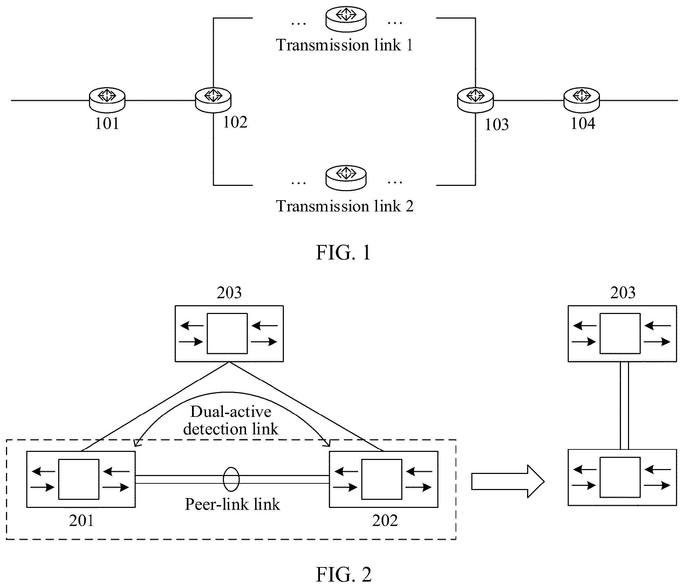

A multi-fed and selective receiving solution, that is, a frame replication and elimination for reliability (frame replication and elimination for reliability, FRER) mechanism is defined in the IEEE 802.1 CB protocol. Reliability of data transmission is improved based on an FRER technology by setting a redundant transmission link and performing parallel redundant data transmission in a communication network. FIG. 1 is a diagram of a structure of a communication network according to an embodiment of this application. As shown in FIG. 1, the communication network includes a node 101, a node 102, a node 103, and a node 104 that are sequentially connected. The node 102 is a replication node (also referred to as a frame replication node), and the node 103 is a selective receiving node (also referred to as a frame elimination node). There are a plurality of transmission links between the node 102 and the node 103, and a transmission link 1 and a transmission link 2 are used as an example in FIG. 1.

For example, when the node 102 receives an original service flow from the node 101, the node 102 replicates a packet of the original service flow, to obtain a first service flow and a second service flow. The node 102 transmits the first service flow to the node 103 through the transmission link 1, and transmits the second service flow to the node 103 through the transmission link 2. The node 103 selectively receives corresponding packets in the first service flow and the second service flow, restores a service flow, and transmits the service flow to the node 104.

In a possible implementation, the multi-fed and selective receiving solution may be combined with an M-LAG technology. The following first describes the M-LAG technology.

The M-LAG technology is a mechanism for implementing multichassis link aggregation. FIG. 2 is a diagram of a structure of a multichassis link aggregation group M-LAG according to an embodiment of this application. As shown in FIG. 2, a communication apparatus 201 and a communication apparatus 202 are M-LAG members. The communication apparatus 201 and the communication apparatus 202 are dual-homed to a communication apparatus 203, and perform multichassis link aggregation with the communication apparatus 203 in a same state, to form an active-active system.

In the M-LAG mechanism, the dual-homed communication apparatus 201 and communication apparatus 202 are logically virtualized into one apparatus. This is equivalent to that the communication apparatus 203 establishes a link aggregation relationship with one apparatus. In this way, the communication apparatus 201 and the communication apparatus 202 may perform load sharing, and jointly forward traffic to the communication apparatus 203. When one of the apparatuses is faulty, traffic forwarded by the faulty apparatus may be switched to the other apparatus, so as to ensure normal forwarding of the traffic. Therefore, the M-LAG can improve link reliability from a board level to a device level.

There are a peer-link and a dual-active detection link between M-LAG members. The peer-link is an aggregation link for direct connection between the M-LAG members, and is used for transmission of a synchronization packet (for example, a MAC entry or an ARP entry), forwarding cross-device traffic from a non-M-LAG member interface or traffic from an M-LAG single-homing member interface in a fault scenario, or transmission of a negotiation packet, which is used for negotiating an active/standby status of two devices in an M-LAG system. Interfaces at two ends of the peer-link are peer-link interfaces. The dual-active detection link, also referred to as a heartbeat link, is a Layer 3 interconnection link. In a normal case, the dual-active detection link does not participate in traffic forwarding. Only in an M-LAG fault scenario, the M-LAG members send dual-active detection packets to each other through the dual-active detection link to check whether a device fault occurs on an M-LAG member.

The following describes possible faults that may occur on the M-LAG.

The possible faults that may occur on the M-LAG include a peer-link fault and a device fault occurring on an M-LAG member. In a possible implementation, the M-LAG member may detect, by sensing an interface status of a peer-link interface and sending the dual-active detection packet through the dual-active detection link, a specific fault that occurs on the M-LAG.

The communication apparatus 201 is used as an example. When sensing that the interface status of the peer-link interface is down, the communication apparatus 201 sends a dual-active detection packet to the communication apparatus 202 through a dual-active detection link, where the dual-active detection packet is used for requesting a feedback packet of the communication apparatus 202. If the communication apparatus 201 receives a feedback packet from the communication apparatus 202 within specified time, the communication apparatus 201 determines that a peer-link fault occurs. If the communication apparatus 201 receives no feedback packet from the communication apparatus 202 within specified time, the communication apparatus 201 determines that a device fault occurs on the communication apparatus 202. It may be understood that each M-LAG member may detect a peer-link fault and a device fault of another member in the foregoing manner. The foregoing uses the communication apparatus 201 merely as an example for description. A fault detection apparatus is not specifically limited in this embodiment of this application.

When a peer-link fault occurs, the M-LAG members become a plurality of standalone devices. If the plurality of standalone devices forward traffic at the same time, problems such as a broadcast storm and MAC address flapping may occur. In this case, the M-LAG members negotiate with each other, and only one apparatus in the M-LAG members is reserved to forward the traffic, and another apparatus no longer forwards the traffic. After the peer-link fault is recovered, the plurality of M-LAG members resumes forwarding the traffic at the same time.

When a device fault occurs on one of the M-LAG members, another M-LAG member on which a device fault does not occur forwards the traffic. After the device fault is recovered, the plurality of M-LAG members resume forwarding the traffic at the same time again.

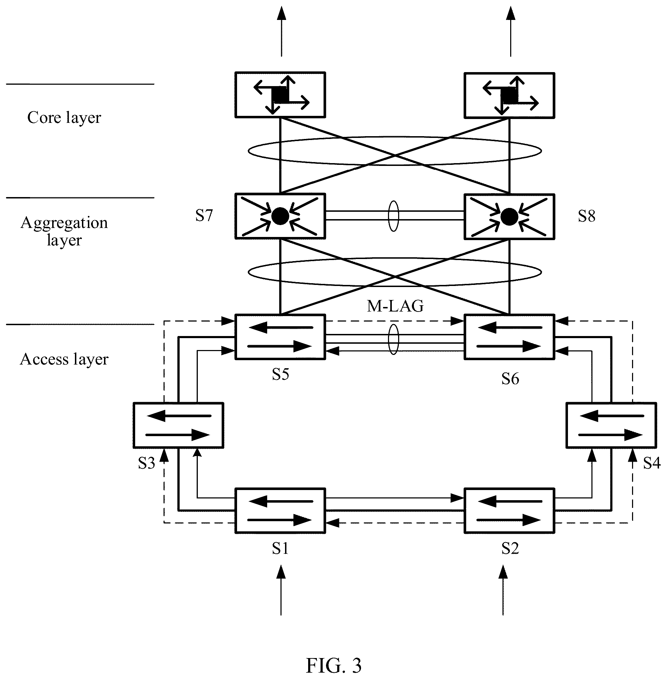

Based on the foregoing multi-fed and selective receiving technology and M-LAG technology, FIG. 3 is a diagram of networking in which the multi-fed and selective receiving technology is combined with the M-LAG technology. As shown in FIG. 3, the networking includes an access layer, an aggregation layer, and a core layer. For example, the access layer is configured to connect to a user side device, and the core layer is configured to connect to a service-side device.

The access layer includes a plurality of communication apparatuses that form a loop, the plurality of communication apparatuses include M-LAG members, and the access layer is connected to the aggregation layer via the M-LAG members. FIG. 3 is used as an example. The access layer includes communication apparatuses S1 to S6 that form a loop. S5 and S6 are M-LAG members, S5 and S6 are connected through a peer-link, and S5 and S6 separately perform multichassis link aggregation with a communication apparatus S7 and a communication apparatus S8 at the aggregation layer.

In an implementation, the access layer transmits a service flow to the aggregation layer based on the multi-fed and selective receiving technology. A controller plans a transmission path of each service flow, and configures the communication apparatus at the access layer based on a planning result. In this embodiment of this application, the M-LAG member is configured as a selective receiving node. Based on a load balancing policy, the controller may configure one M-LAG member as a selective receiving node of a part of service flows, and configure another M-LAG member as a selective receiving node of the other part of service flows.

The following uses an example in which the M-LAG members perform load sharing on two service flows for description.

First, a replication node and a selective receiving node are separately configured for a service flow A and a service flow B. Replication nodes of the service flow A and the service flow B may be configured as a same node or replication nodes of the service flow A and the service flow B may be configured as different nodes to implement load sharing. Then, one M-LAG member is configured as the selective receiving node of the service flow A, and the another M-LAG member is configured as the selective receiving node of the service flow B. In an example, S1 may be configured as the replication node of the service flow A, S5 may be configured as the selective receiving node of the service flow A, S2 may be configured as the replication node of the service flow B, and S6 may be configured as the selective receiving node of the service flow B. Alternatively, a person skilled in the art may understand that S1 may be configured as the replication node of the service flow B and S2 may be configured as the replication node of the service flow A, S1 or S2 may be configured as the replication node of the service flow A and the service flow B, S6 may be configured as the selective receiving node of the service flow A and S5 may be configured as the selective receiving node of the service flow B, or the like. This is not limited in this application.

For example, S1 is the replication node of the service flow A, S5 is the selective receiving node of the service flow A, S2 is the replication node of the service flow B, and S6 is the selective receiving node of the service flow B. In a normal case, S1 replicates the received service flow A to obtain two service flows A, where a transmission path of one service flow A is S1->S3->S5, and a transmission path of the other service flow A is S1->S2->S4->S6->S5 (shown by solid lines with arrows). S5 selectively receives the two service flows A, and transmits one service flow A to S7 (or S8). It may be understood that the M-LAG member S6 is a transparent transmission node of the service flow A. In addition, S2 replicates the received service flow B to obtain two service flows B, where a transmission path of one service flow B is S2->S1->S3->S5->S6, and a transmission path of the other service flow B is S2->S4->S6 (shown by dashed lines with arrows). S6 selectively receives the two service flows B, and transmits one service flow B to S7 (or S8). It may be understood that the M-LAG member S5 is a transparent transmission node of the service flow B.

If S5 is faulty, the service flow A cannot be normally transmitted to the aggregation layer. If S6 is faulty, the service flow B cannot be normally transmitted to the aggregation layer. That is, if an M-LAG member is faulty, transmission of a part of service flows cannot be normally performed. In a possible solution, the controller senses a fault of the M-LAG member, re-plans paths for all service flows, reconfigures the communication apparatuses, and plans all the service flows to an M-LAG member that is not faulty for selective receiving. Because the controller takes long time to sense the fault and re-plans the paths, packet loss time of a service flow that is originally selectively received by the faulty M-LAG member is excessively long, and normal service running is severely affected. In this case, when an M-LAG member is faulty, how to quickly restore normal transmission of a service flow that is originally selectively received by the faulty M-LAG member to reduce packet loss time becomes a problem that needs to be urgently resolved.

Based on the foregoing problem, embodiments of this application provide a service flow transmission method. In embodiments of this application, service flows are grouped into service flow groups. One M-LAG member is configured as a transparent transmission node of a first service flow group, and another M-LAG member is configured as a selective receiving node of the first service flow group. The first service flow group is associated with one or more service flows. When the M-LAG member that selectively receives the first service flow group is faulty, the another M-LAG member changes the another M-LAG member from the transparent transmission node of the first service flow group to the selective receiving node of the first service flow group. In this manner, the first service flow group is quickly switched for selective receiving that is performed locally, so that normal transmission of a service flow in the first service flow group can be quickly restored, packet loss time of the service flow is reduced, thereby improving transmission reliability of the service flow.

The technical solutions provided in embodiments of this application may be applied to a plurality of networking environments. The following first describes the networking environment in embodiments of this application with reference to an example.

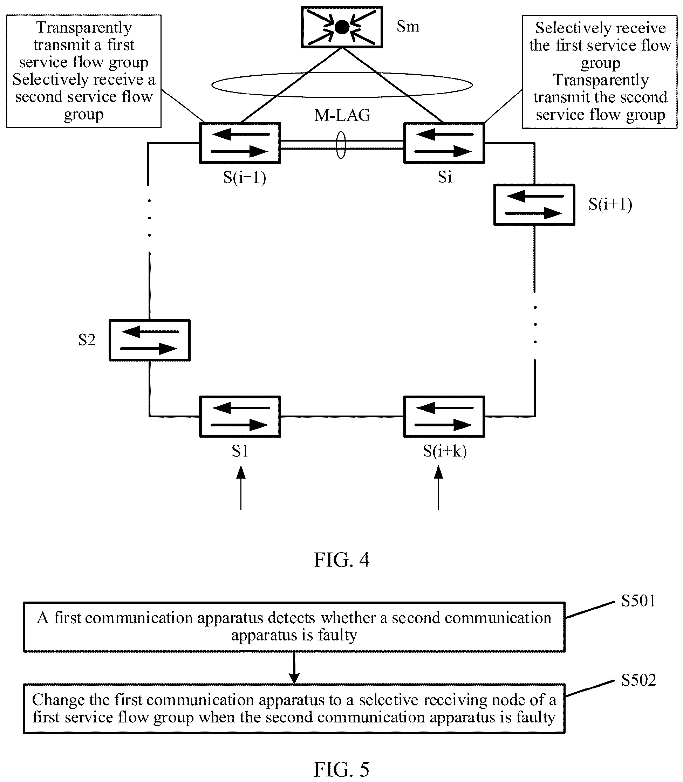

FIG. 4 is a diagram of a structure of a communication network according to an embodiment of this application. As shown in FIG. 4, the communication network includes a communication apparatus S1 to a communication apparatus S(i+k) that form a loop. The communication apparatus S(i-1) and the communication apparatus Si are M-LAG members, the communication apparatus S(i-1) and the communication apparatus Si are connected through a peer-link, and the communication apparatus S(i-1) and the communication apparatus Si separately perform multichassis link aggregation with a communication apparatus Sm, where both i and k are positive integers. For example, a hardware implementation of the communication apparatus S1 and the communication apparatus S(i+k) that are configured to receive a service flow may be a network device, for example, a router, a switch, or an end-side device, or may be a component (for example, a board), a chip, or the like that is in the network device and that is configured to implement the foregoing functions. A hardware implementation of another communication apparatus may be a router or a switch.

A controller plans a path for a service flow in the network, and configures each communication apparatus based on a planning result. In this embodiment of this application, the controller plans that a transparent transmission node of a first service flow group is the communication apparatus S(i-1), and a selective receiving node of the first service flow group is the communication apparatus Si. The controller configures the communication apparatus S(i-1) and the communication apparatus Si based on the planning result.

In a possible implementation, the controller configures the communication apparatus S(i-1) and the communication apparatus Si based on a service flow.

The communication apparatus S(i-1) is configured as a transparent transmission node of each service flow in the first service flow group, and the communication apparatus Si is configured as a selective receiving node of each service flow in the first service flow group.

The communication apparatus S(i-1) is used as an example. It is assumed that the first service flow group includes M service flows, where M is a positive integer. In an example, the communication apparatus S(i-1) includes association information, and the association information indicates that the M service flows are associated with the first service flow group. In addition, the communication apparatus S(i-1) includes M pieces of configuration information that are in one-to-one correspondence with the M service flows. Each piece of configuration information indicates a forwarding behavior corresponding to a corresponding service flow. For example, if a service flow A is a service flow in the first service flow group, configuration information corresponding to the service flow A may include identification information of the service flow A (for example, 5-tuple information of the service flow A) and forwarding information indicating that a forwarding behavior is transparent transmission. In this way, the communication apparatus S(i-1) may perform transparent transmission of the service flow A based on the configuration information corresponding to the service flow A.

Similarly, in an example, the communication apparatus Si also includes association information, and the association information indicates that the M service flows are associated with the first service flow group. In addition, the communication apparatus Si includes M pieces of configuration information that are in one-to-one correspondence with the M service flows. Each piece of configuration information indicates a forwarding behavior corresponding to a corresponding service flow. The service flow A is used as an example. Configuration information corresponding to the service flow A in the communication apparatus Si may include identification information of the service flow A (for example, 5-tuple information of the service flow A) and forwarding information indicating that a forwarding behavior is selective receiving. In this way, the communication apparatus Si may selectively receive the service flow A based on the configuration information corresponding to the service flow A.

In a possible implementation, the communication apparatus S(i-1) and the communication apparatus Si implement load sharing, a part of service flows is selectively received by the communication apparatus S(i-1), and a part of service flows is selectively received by the communication apparatus Si. For example, the communication apparatus S(i-1) is configured as the transparent transmission node of each service flow in the first service flow group and a selective receiving node of each service flow in a second service flow group, and the communication apparatus Si is configured as the selective receiving node of each service flow in the first service flow group and a transparent transmission node of each service flow in the second service flow group.

The communication apparatus S(i-1) is still used as an example. It is assumed that the second service flow group includes N service flows, where N is a positive integer. In an example, the association information included in the configured communication apparatus S(i-1) further indicates that the N service flows are associated with the second service flow group. In addition, the communication apparatus S(i-1) includes M+N pieces of configuration information that are in one-to-one correspondence with M+N service flows. Each piece of configuration information indicates a forwarding behavior corresponding to a corresponding service flow. For example, if a service flow A is a service flow in the first service flow group, configuration information corresponding to the service flow A may include identification information of the service flow A (for example, 5-tuple information of the service flow A) and forwarding information indicating that a forwarding behavior is transparent transmission. For another example, if a service flow B is a service flow in the second service flow group, configuration information corresponding to the service flow B may include identification information of the service flow B (for example, 5-tuple information of the service flow B) and forwarding information indicating that a forwarding behavior is selective receiving. Similarly, the communication apparatus Si is similar to the communication apparatus S(i-1). However, in the communication apparatus Si, forwarding information included in configuration information of each service flow in the first service flow group indicates that a forwarding behavior is selective receiving, and forwarding information included in configuration information of each service flow in the second service flow group indicates that a forwarding behavior is transparent transmission.

In another possible implementation, the controller configures the communication apparatus S(i-1) and the communication apparatus Si based on a service flow group.

The communication apparatus S(i-1) is configured as the transparent transmission node of the first service flow group, and the communication apparatus Si is configured as the selective receiving node of the first service flow group.

The communication apparatus S(i-1) is used as an example. It is assumed that the first service flow group includes M service flows, where M is a positive integer. In an example, the configured communication apparatus S(i-1) includes association information, and the association information indicates that the M service flows are associated with the first service flow group. In addition, the communication apparatus S(i-1) includes first configuration information, and the first configuration information indicates that a forwarding behavior corresponding to the first service flow group is transparent transmission. In an example, the first configuration information includes group identification information of the first service flow group and forwarding information indicating that the forwarding behavior is transparent transmission. In another example, the first configuration information includes identification information of all service flows in the first service flow group and the forwarding information indicating that the forwarding behavior is transparent transmission.

Similarly, the configured communication apparatus Si also includes association information, and the association information indicates that the M service flows are associated with the first service flow group. In addition, the communication apparatus Si includes second configuration information. The second configuration information indicates that a forwarding behavior corresponding to the first service flow group is selective receiving. In an example, the second configuration information includes the group identification information of the first service flow group and forwarding information indicating that the forwarding behavior is selective receiving. In another example, the second configuration information includes the identification information of all the service flows in the first service flow group and the forwarding information indicating that the forwarding behavior is selective receiving.

In a possible implementation, the communication apparatus S(i-1) and the communication apparatus Si implement load sharing, a part of service flows is selectively received by the communication apparatus S(i-1), and a part of service flows is selectively received by the communication apparatus Si. For example, the communication apparatus S(i-1) is configured as the transparent transmission node of the first service flow group and a selective receiving node of a second service flow group, and the communication apparatus Si is configured as the selective receiving node of the first service flow group and a transparent transmission node of the second service flow group.

The communication apparatus S(i-1) is still used as an example. It is assumed that the second service flow group includes N service flows, where N is a positive integer. In an example, the association information included in the configured communication apparatus S(i-1) further indicates that the N service flows are associated with the second service flow group. In addition, the communication apparatus S(i-1) further includes third configuration information, and the third configuration information indicates that a forwarding behavior corresponding to the second service flow group is selective receiving. In an example, the third configuration information includes group identification information of the second service flow group and forwarding information indicating that the forwarding behavior is selective receiving. In another example, the third configuration information includes identification information of all service flows in the second service flow group and the forwarding information indicating that the forwarding behavior is selective receiving. Similarly, the configured communication apparatus Si is similar to the communication apparatus S(i-1), and the communication apparatus Si further includes fourth configuration information, where the fourth configuration information indicates that a forwarding behavior corresponding to the second service flow group is transparent transmission.

Based on the foregoing networking environment, FIG. 5 is a schematic flowchart of a service flow transmission method according to an embodiment of this application. As shown in FIG. 5, the service flow transmission method includes the following steps.

S501: A first communication apparatus detects whether a second communication apparatus is faulty.

The first communication apparatus and the second communication apparatus are M-LAG members. The first communication apparatus is configured as a transparent transmission node of a first service flow group, and the second communication apparatus is configured as a selective receiving node of the first service flow group. For example, the first communication apparatus may be the communication apparatus S(i-1) shown in FIG. 4, and the second communication apparatus may be the communication apparatus Si shown in FIG. 4. For a configuration manner of the first communication apparatus and the second communication apparatus, refer to the configuration manner of the communication apparatus S(i-1) and the communication apparatus Si in the embodiment shown in FIG. 4. Details are not described herein again.

Because the first communication apparatus and the second communication apparatus are the M-LAG members, the first communication apparatus and the second communication apparatus may detect, based on an M-LAG detection mechanism, whether the other is faulty. In this embodiment of this application, an example in which the first communication apparatus monitors whether the second communication apparatus is faulty is used for description.

For example, that the second communication apparatus is faulty may include: a peer-link fault occurs between the first communication apparatus and the second communication apparatus, or a device fault occurs on the second communication apparatus.

S502: Change the first communication apparatus to the selective receiving node of the first service flow group when the second communication apparatus is faulty.

After detecting that the second communication apparatus is fault, the first communication apparatus changes the first communication apparatus from the transparent transmission node of the first service flow group to the selective receiving node of the first service flow group. In this way, a service flow that is originally selectively received by the second communication apparatus is switched to the first communication apparatus for selective receiving, and the first communication apparatus no longer transparently transmits a received service flow in the first service flow group to the second communication apparatus, but directly forwards the service flow in the first service flow group to an upstream communication apparatus, to ensure normal forwarding of the service flow in the first service flow group.

For example, if a controller configures the first communication apparatus and the second communication apparatus based on a service flow, the first communication apparatus configures the first communication apparatus as a selective receiving node of each service flow in the first service flow group when the second communication apparatus is faulty.

The first communication apparatus includes configuration information corresponding to each service flow. The first communication apparatus changes the configuration information of each service flow in the first service flow group, and changes (accordingly changes) a forwarding behavior indicated by the configuration information of each service flow in the first service flow group to selective receiving.

For example, if the controller configures the first communication apparatus and the second communication apparatus based on a service flow group, the first communication apparatus configures the first communication apparatus as the selective receiving node of the first service flow group when the second communication apparatus is faulty.

The first communication apparatus includes first configuration information, and the first configuration information is configuration information corresponding to the first service flow group. The first communication apparatus changes the first configuration information, so that changed first configuration information indicates that a forwarding behavior corresponding to the first service flow group is selective receiving.

In this way, the service flow in the first service flow group is selectively received by the first communication apparatus. Even if the second communication apparatus is faulty, transmission of the service flow is not interrupted, thereby ensuring normal transmission of the service flow.

In this embodiment of this application, when the second communication apparatus is faulty, the first communication apparatus directly changes the first communication apparatus to the selective receiving node of the first service flow group, to switch all service flows that are selectively received by the second communication apparatus and that are in the first service flow group to the first communication apparatus for selective receiving at a time. In this way, normal transmission of all the service flows in the first service flow group can be quickly restored, packet loss time of all the service flows in the first service flow group is reduced, and recovery time of a service flow transmission fault is improved to a millisecond level, so that transmission quality of the service flow is greatly improved, and reliability of a communication system is improved.

In an implementation, after changing to the selective receiving node of the first service flow group, the first communication apparatus may send a first message to the upper-layer controller, so that the controller learns of a current transmission path of a service flow in the first service flow group. This helps the controller perform network operation and maintenance.

Further, after the second communication apparatus recovers from the fault, the first communication apparatus may further restore the first communication apparatus to the transparent transmission node of the first service flow group. It may be understood that, for a restoration manner, refer to the change manner described in S502. To be specific, the first communication apparatus reconfigures the first communication apparatus as a transparent transmission node of each service flow in the first service flow group, or reconfigures the first communication apparatus as the transparent transmission node of the first service flow group, to restore the transmission of the service flow in the first service flow group. Details are not described herein again.

Similarly, the second communication apparatus may also perform service flow switching. In the scenario in which the first communication apparatus and the second communication apparatus perform load sharing shown in FIG. 4, the first communication apparatus is the transparent transmission node of the first service flow group and the selective receiving node of the second service flow group, and the second communication apparatus is the selective receiving node of the first service flow group and the transparent transmission node of the second communication apparatus. In this case, when the first communication apparatus detects that the second communication apparatus is faulty, the first communication apparatus changes the first communication apparatus from the transparent transmission node of the first service flow group to the selective receiving node of the first service flow group, to implement fast switching of the service flow in the first service flow group. In addition, when the second communication apparatus detects that the first communication apparatus is faulty, the second communication apparatus changes the second communication apparatus from the transparent transmission node of the second service flow group to the selective receiving node of the second service flow group, to implement fast switching of a service flow in the second service flow group, and ensure normal transmission of the service flow in the second service flow group. Details are not described in this embodiment of this application.

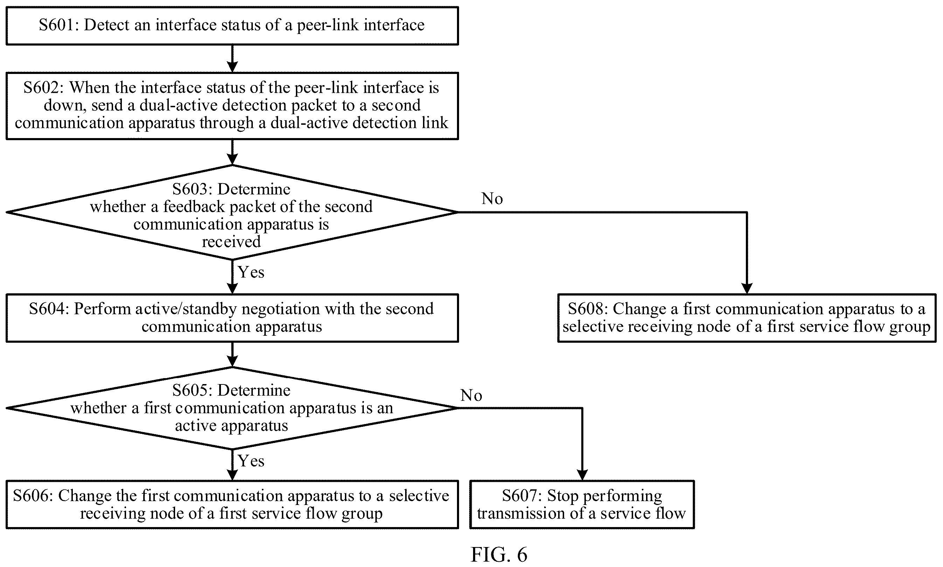

The following describes this embodiment of this application again according to the M-LAG detection mechanism. FIG. 6 is a diagram of a structure of another service flow transmission method according to an embodiment of this application. As shown in FIG. 6, the service flow transmission method is applied to a first communication apparatus, and includes the following steps.

S601: Detect an interface status of a peer-link interface.

The first communication apparatus and a second communication apparatus are M-LAG members. The first communication apparatus and the second communication apparatus are connected through a peer-link. Interfaces at two ends of the peer-link are peer-link interfaces. The first communication apparatus determines, by detecting the interface status of the peer-link interface, whether the peer-link is disconnected.

For example, when the peer-link is connected, the interface status of the peer-link interface is up, and the first communication apparatus and the second communication apparatus can normally communicate with each other; and when the peer-link is disconnected, the interface status of the peer-link interface is down, and the first communication apparatus and the second communication apparatus cannot normally communicate with each other.

In an optional embodiment, when the first communication apparatus senses, based on the interface status of the peer-link interface, that the peer-link is disconnected, the first communication apparatus cannot transparently transmit a received service flow in a first service flow group to the second communication apparatus. In this case, the first communication apparatus may change the first communication apparatus to a selective receiving node of the first service flow group. In this way, the first communication apparatus directly forwards the received service flow in the first service flow group to an upstream communication apparatus. It may be understood that the peer-link may also be disconnected when no device fault occurs on the second communication apparatus. Therefore, when the first communication apparatus changes, after sensing that the peer-link is disconnected, to selectively receiving the service flow in the first service flow group, it is highly likely to cause the upstream communication apparatus to receive a plurality of service flows of a same service from the first communication apparatus and the second communication apparatus.

S602: When the interface status of the peer-link interface is down, send a dual-active detection packet to the second communication apparatus through a dual-active detection link.

In an implementation, when the first communication apparatus detects that the interface status of the peer-link interface is down, the first communication apparatus further detects whether the device fault occurs on the second communication apparatus. The first communication apparatus sends the dual-active detection packet to the second communication apparatus through the dual-active detection link, to determine whether the device fault occurs on the second communication apparatus. The dual-active detection packet is used for requesting a feedback packet.

S603: Determine whether a feedback packet from the second communication apparatus is received; and perform step S604 if a feedback packet from the second communication apparatus is received; or perform step S608 if no feedback packet from the second communication apparatus is received.

It may be understood that when the device fault occurs on the second communication apparatus, the second communication apparatus cannot respond to the dual-active detection packet, and the first communication apparatus receives no feedback packet sent by the second communication apparatus; or when no device fault occurs on the second communication apparatus, the second communication apparatus responds to the dual-active detection packet, and may send the feedback packet to the first communication apparatus.

S604: Perform active/standby negotiation with the second communication apparatus.

When the first communication apparatus receives the feedback packet sent by the second communication apparatus, the first communication apparatus determines, based on the feedback packet, that no device fault occurs on the second communication apparatus. In this case, the first communication apparatus and the second communication apparatus are standalone. If a plurality of standalone devices forward traffic at the same time, problems such as a broadcast storm and MAC address flapping may occur. Therefore, the first communication apparatus and the second communication apparatus need to perform active/standby negotiation, only an active apparatus forwards traffic, and a standby apparatus does not forward traffic.

S605: Determine whether the first communication apparatus is the active apparatus; and perform step S606 if the first communication apparatus is the active apparatus; or perform step S607 if the first communication apparatus is not the active apparatus.

After the first communication apparatus and the second communication apparatus perform active/standby negotiation, the first communication apparatus determines whether the first communication apparatus is the active apparatus.

S606: Change the first communication apparatus to the selective receiving node of the first service flow group.

If the first communication apparatus is the active apparatus, the first communication apparatus changes the first communication apparatus to the selective receiving node of the first service flow group. In this way, the service flow in the first service flow group is selectively received by the first communication apparatus, and the first communication apparatus forwards the received service flow in the first service flow group to the upstream communication apparatus. It may be understood that, for a specific change manner, refer to the content described in S502 in the embodiment shown in FIG. 5. Details are not described herein again. In this case, the second communication apparatus disables a corresponding port, and no longer performs transmission of a service flow.

S607: Stop performing transmission of a service flow.

If the first communication apparatus is the standby apparatus, a corresponding port is disabled, and transmission of the service flow is no longer performed. In a scenario in which the first communication apparatus and the second communication apparatus perform load sharing, the first communication apparatus is originally not only a transparent transmission node of the first service flow group, but also a selective receiving node of a second service flow group. In this case, the second communication apparatus may change the second communication apparatus to the selective receiving node of the second service flow group. In this way, a service flow in the second service flow group is selectively received by the second communication apparatus, and the second communication apparatus forwards the received service flow in the second service flow group to the upstream communication apparatus. In this way, when the first communication apparatus stops performing transmission of the service flow, normal transmission of the service flow in the second service flow group can be further ensured. It may be understood that, for a change manner of the second communication apparatus, refer to the content described in S502 in the embodiment shown in FIG. 5. Details are not described herein again.

S608: Change the first communication apparatus to the selective receiving node of the first service flow group.

When the first communication apparatus receives no feedback packet sent by the second communication apparatus, the first communication apparatus determines that the device fault occurs on the second communication apparatus. In this case, the second communication apparatus cannot perform transmission of the service flow. In this way, the first communication apparatus directly changes the first communication apparatus to the selective receiving node of the first service flow group. In this way, the service flow in the first service flow group is selectively received by the first communication apparatus, and is forwarded by the first communication apparatus to the upstream communication apparatus. It may be understood that, for a specific change manner, refer to the content described in S502 in the embodiment shown in FIG. 5. Details are not described herein again.

In embodiments of this application, the first communication apparatus may be divided into function modules based on the foregoing method examples. For example, each function module may be obtained through division based on each corresponding function, or two or more functions may be integrated into one module. The integrated module may be implemented in a form of hardware, or may be implemented in a form of a software function module. It should be noted that, in embodiments of this application, module division is an example, and is merely a logical function division. In actual implementation, another division manner may be used. An example in which each function module is obtained through division based on each corresponding function is used below for description.

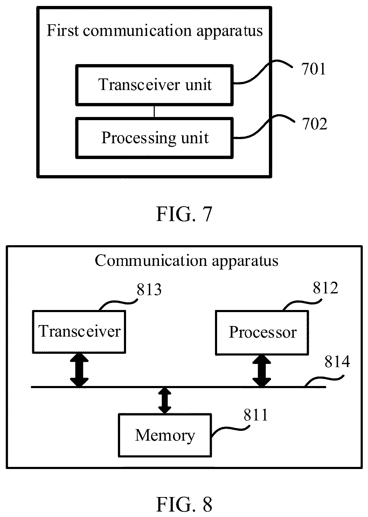

When an integrated unit is used, FIG. 7 is a diagram of a structure of a first communication apparatus in the foregoing embodiments. The apparatus includes a transceiver unit 701 and a processing unit 702. In a possible embodiment, the processing unit 702 is configured to indicate the apparatus to perform S501 and S502 in the foregoing method embodiments. In another possible embodiment, the processing unit 702 is configured to support the apparatus in performing S601 to S608 in the foregoing method embodiments.

All related content of each step involved in the foregoing method embodiments may be referenced to a function description of a corresponding function module, and details are not described herein again in embodiments of this application.

Based on hardware implementation, the processing unit 702 in this embodiment of this application may be a processor of the apparatus.

FIG. 8 is a diagram of a structure of a communication apparatus in the foregoing embodiments according to an embodiment of this application. The apparatus includes a processor 812 and a transceiver 813. Further, the apparatus further includes a memory 811 and a bus 814. The processor 812, the memory 811, and a transceiver 813 are connected through a bus 1014.

A processor 812 is configured to control and manage an action of the apparatus. In a possible embodiment, the processor 812 is configured to support the apparatus in performing S501 and S502 in the foregoing method embodiments, and/or another technical process described in this specification. In another possible embodiment, the processor 812 is configured to support the apparatus in performing detecting the interface status of the peer-link interface in S601, changing the first communication apparatus to the selective receiving node of the second service flow group in S608 in the foregoing method embodiments, and the like; and/or another technical process described in this specification is performed. The transceiver 813 is configured to support the apparatus in communicating, for example, support the apparatus in communicating with another communication apparatus.

In this embodiment of this application, the processor 812 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination for implementing a computing function, for example, a combination of one or more microprocessors, or a combination of the digital signal processor and a microprocessor. The bus 1014 may include an address bus, a data bus, a control bus, and the like.

In still another embodiment of this application, a communication system is provided. The communication system includes a first communication apparatus, a second communication apparatus, and a controller. The first communication apparatus and the second communication apparatus implement link aggregation with an upstream communication apparatus. The controller is configured to: configure the first communication apparatus as a selective receiving node of a first service flow group and a transparent transmission node of a second service flow group, and configure the second communication apparatus as a transparent transmission node of the first service flow group and a selective receiving node of the second service flow group. The first service flow group is associated with at least one service flow, and the second service flow group is associated with at least one service flow. The first communication apparatus is configured to perform one or more steps performed by the first communication apparatus in the method embodiments provided above.

In still another embodiment of this application, the first communication apparatus mentioned above may be, for example, a chip. The chip includes a processor and an interface circuit. The processor and the interface circuit are configured to support the chip in performing one or more steps performed by the first communication apparatus in the method embodiments provided above.

In still another embodiment of this application, a computer-readable storage medium is provided. The computer-readable storage medium stores a computer program or instructions. When the computer program or the instructions are run, one or more steps performed by the first communication apparatus in the foregoing method embodiments are implemented.

In still another embodiment of this application, a computer program product is provided. The computer program product includes a computer program (or referred to as code or instructions). When the computer program is run, a computer is caused to perform one or more steps performed by the first communication apparatus in the method embodiments provided above.

It should be finally noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service flow transmission method, applied to a first communication apparatus, wherein the first communication apparatus and a second communication apparatus are multichassis link aggregation group M-LAG members, the first communication apparatus is a transparent transmission node of a first service flow group, the second communication apparatus is a selective receiving node of the first service flow group, the first service flow group is associated with at least one service flow, and the method comprises:
changing the first communication apparatus from the transparent transmission node of the first service flow group to a selective receiving node of the first service flow group when the second communication apparatus is faulty.

2. The method according to claim 1, wherein the method further comprises:
after the second communication apparatus recovers from a fault, restoring the first communication apparatus from the selective receiving node of the first service flow group to the transparent transmission node of the first service flow group.

3. The method according to claim 1 or 2, wherein the first communication apparatus is the selective receiving node of a second service flow group, the second communication apparatus is a transparent transmission node of the second service flow group, and the second service flow group is associated with at least one service flow.

4. The method according to claim 3, wherein when the second communication apparatus operates normally, the first communication apparatus is configured as a transparent transmission node of each service flow in the first service flow group, and the first communication apparatus is configured as a selective receiving node of each service flow in the second service flow group; and
the changing the first communication apparatus from the transparent transmission node of the first service flow group to the selective receiving node of the first service flow group when the second communication apparatus is faulty comprises:
configuring the first communication apparatus as a selective receiving node of each service flow in the first service flow group when the second communication apparatus is faulty.

5. The method according to claim 3, wherein when the second communication apparatus operates normally, the first communication apparatus is configured as the transparent transmission node of the first service flow group, and the first communication apparatus is configured as the selective receiving node of the second service flow group; and
the changing the first communication apparatus from the transparent transmission node of the first service flow group to the selective receiving node of the first service flow group when the second communication apparatus is faulty comprises:
configuring the first communication apparatus as the selective receiving node of the first service flow group when the second communication apparatus is faulty.

6. The method according to either of claims 3 and 4, wherein the at least one service flow associated with the first service flow group comprises all service flows that are selectively received by the second communication apparatus when the second communication apparatus operates normally, and the at least one service flow associated with the second service flow group comprises all service flows that are selectively received by the first communication apparatus.

7. The method according to any one of claims 1 to 6, wherein that the second communication apparatus is faulty comprises:
a peer-link fault occurs between the first communication apparatus and the second communication apparatus; or
a device fault occurs on the second communication apparatus.

8. The method according to any one of claims 1 to 7, wherein the method further comprises:
sending first information to a controller, wherein the first information indicates that the first communication apparatus changes to the selective receiving node of the first service flow group.

9. A first communication apparatus, wherein the first communication apparatus and a second communication apparatus are multichassis link aggregation group M-LAG members, the first communication apparatus is a transparent transmission node of a first service flow group, the second communication apparatus is a selective receiving node of the first service flow group, the first service flow group is associated with at least one service flow, and the first communication apparatus comprises:
a processing unit, configured to change the first communication apparatus from the transparent transmission node of the first service flow group to the selective receiving node of the first service flow group when the second communication apparatus is faulty.

10. The first communication apparatus according to claim 9, wherein
the processing unit is further configured to: after the second communication apparatus recovers from a fault, restore the first communication apparatus from the selective receiving node of the first service flow group to the transparent transmission node of the first service flow group.

11. The first communication apparatus according to claim 9 or 10, wherein the first communication apparatus is a selective receiving node of a second service flow group, the second communication apparatus is a transparent transmission node of the second service flow group, and the second service flow group is associated with at least one service flow.

12. The first communication apparatus according to claim 11, wherein when the second communication apparatus operates normally, the first communication apparatus is configured as a transparent transmission node of each service flow in the first service flow group, and the first communication apparatus is configured as a selective receiving node of each service flow in the second service flow group; and
the processing unit is specifically configured to configure the first communication apparatus as a selective receiving node of each service flow in the first service flow group when the second communication apparatus is faulty.

13. The first communication apparatus according to claim 11, wherein when the second communication apparatus operates normally, the first communication apparatus is configured as the transparent transmission node of the first service flow group, and the first communication apparatus is configured as the selective receiving node of the second service flow group; and
the processing unit is specifically configured to configure the first communication apparatus as the selective receiving node of the first service flow group when the second communication apparatus is faulty.

14. The first communication apparatus according to any one of claims 9 to 13, wherein the at least one service flow associated with the first service flow group comprises all service flows that are selectively received by the second communication apparatus when the second communication apparatus operates normally, and the at least one service flow associated with the second service flow group comprises all service flows that are selectively received by the first communication apparatus.

15. The first communication apparatus according to any one of claims 9 to 14, wherein that the second communication apparatus is faulty comprises: a peer-link fault occurs between the first communication apparatus and the second communication apparatus; or a device fault occurs on the second communication apparatus.
